# EUROPEAN PATENT APPLICATION

(11) **EP 2 189 238 A1**
(43) Date of publication of application: **26.05.2010**
(21) Application number: 09175915.9
(22) Date of filing: 13.11.2009
(51) Int. Cl.: B23K 31/02, B23P 6/00, F01D 5/00, G05B 19/401, G05B 19/42

(54) **Method of repairing an article with calculation of welding sequence**

(30) Priority: 20.11.2008 US 274679
(71) Applicant: General Electric Company, Schenectady, NY 12345 (US)
(72) Inventor: Sassatelli, John M., Valley Falls, NY 12185 (US); Cutler, Jeffrey P., Cohoes, NY 12047 (US); Cook, Carter S., Westford, NY 13488 (US)
(74) Representative: Gray, Thomas

(57) **Abstract**

A method (200) of repairing an article is provided, and includes an identifying step (210) to identify the article to be repaired. A touch off step (220) locates and marks a plurality of spatial coordinates on the article relative to a home position. A calculating step (230) is performed to calculate a desired welding sequence to obtain a desired shape of the article. A verification step (240) verifies the desired location of the plurality of spatial coordinates. A welding step (250) deposits at least a first weld repair layer on a surface of the article, and the article is repaired by building up at least a portion of a surface of the article to a desired shape or profile.

## Description

### BACKGROUND OF THE INVENTION

The present invention relates to welding processes. More particularly, this invention relates to a robotic programming method for improving the weld process.

Robots are particularly suited for performing the same automated task over and over again. In some industries, such as repair services organizations, the jobs (or parts) are not identical from one to the next. As a consequence, constant adjustment of the automated program is required. Conventional control programs, do not allow for such adjustments in an automatic operation mode, but rather require rewriting of entire sections of motion control code.

As one example, in steam turbine applications a bypass valve often needs to be repaired due to erosion and damage caused by steam at high pressure and temperature. The bypass valve typically has three or more surfaces to be built up to a specific thickness. An operator must calculate the thickness of each weld pass, the number of passes required and determine the physical locations of each weld pass on the valve. Even using a programmable welding method, this process results in over one hundred points to be programmed individually on each bypass valve. Another disadvantage to this method is that each bypass valve has different weld requirements, so the above process must be repeated for every valve to be repaired. This results in a very time consuming and expensive process.

It has been alternatively proposed to restore all the bypass valves from a minimum material condition. This process entails machining away much of the base material, and subsequently performing a large weld deposit to restore the desired shape. This action, however, adds significant cost in material and time to the work being performed.

### BRIEF SUMMARY OF THE INVENTION

According to one aspect of the present invention, a method for repairing an article is provided, and includes an identifying step to identify the article to be repaired. A touch off step locates and marks a plurality of spatial coordinates on the article relative to a home position. A calculating step is performed to calculate a desired welding sequence to obtain a desired shape of the article. A verification step verifies the desired location of the plurality of spatial coordinates. A welding step deposits at least a first weld repair layer on a surface of the article, and the article is repaired by building up at least a portion of a surface of the article to a desired shape or profile.

### BRIEF DESCRIPTION OF THE DRAWINGS

There follows a detailed description of embodiments of the invention by way of example only with reference to the accompanying drawings, in which:
FIG. 1 represents a cross-section of a bypass valve that may be repaired in accordance with aspects of the present invention;
FIG. 2 is a flowchart illustrating a process in accordance with aspects of the present invention.

### DETAILED DESCRIPTION OF THE INVENTION

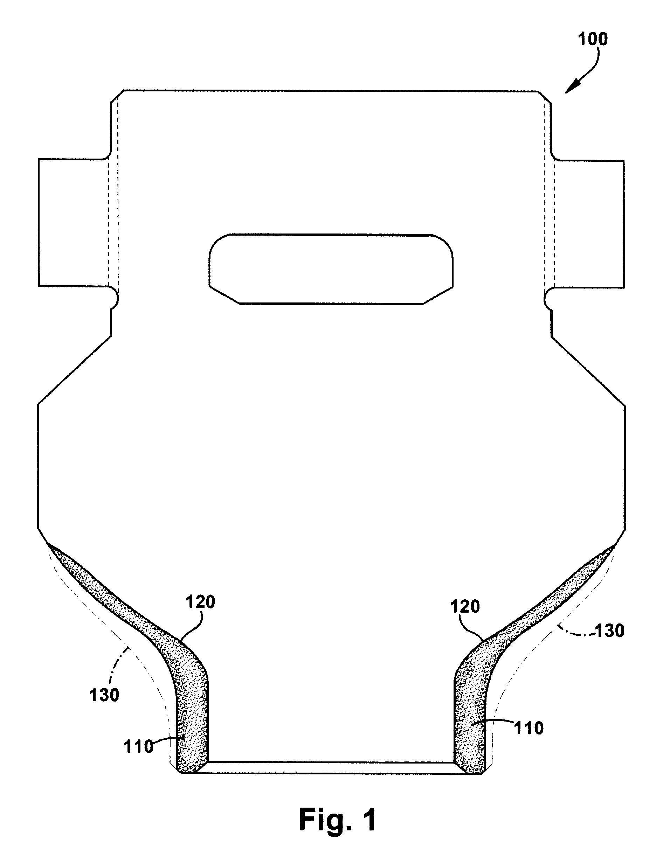

FIG. 1 represents in cross-section a bypass valve that can be repaired in accordance with the method of the present invention. An example of such an article is a component of a steam turbine, a gas turbine component, a wind turbine component, and a bypass valve, though a wide variety of components could be repaired by the method of this invention. As represented in FIG. 1, the bypass valve 100 generally includes a damaged region 110, which is illustrated by the shaded area on the lower portion of the valve body. During use, steam, and contaminants within the steam can erode, cause fractures and fissures or otherwise damage the lower portion of valve 110.

The damaged region 110 should be removed, and this can normally be obtained by machining or milling down to an undamaged layer 120. The valve can then be built back up by welding new material to restore the original surface 130. The weld repair generally includes one or more weld repair layers that have been deposited on the surface of the base material to yield a surfacing weld repair. According to aspects of this invention, when repairing CrMoV and CrMo alloys of the type used to form steam turbine components, an example of which is 1.25Cr-1Mo-0.25V (in weight percent), suitable materials for the weld repair include CrMo, CrMoV and NiCrFe alloys. A particularly suitable nickel chromium iron alloy is NiCrFe-3. Other alloys, filler metals or weld electrodes could also be used such as, but not limited to, Inconel® (a registered trademark of the Special Metals group of companies) alloys 82 (ERNiCr-3), 182 (ENiCrFe-3), 625 (ERNiCrMo-3), 718 (ERNiFeCr-2), cobalt base alloys, Stellite® (a registered trademark of the Deloro Stellite Company) 6 (SFA 5.21 ERCoCr-A), Stellite® 21 ((SF)A 5.21 ERCoCr-E).

A method for repairing a bypass valve, according to one aspect of the present invention, can include marking and/or identifying the part. For example, the job number can be stamped on a portion of the bypass valve. The bore size can then be inspected. If the bore fails inspection, it may require welding.

The valve can then have surface layers removed. For example, all the Stellite® (a common outer layer) material can be machined off. A check can be performed to verify if this first pass reaches the parent material in all locations. If needed, the valve can continue to be machined until the body material is reached if all of the Stellite® material is not completely removed during the first cut.

All Stellite® and previously applied 308 Stainless steel underlayment is preferably substantially removed, and if there is any question about material remaining, it can be cut off as it is more difficult to complete the repair if any original Stellite® remains due to potential weld-ability and cracking issues.

The bore can be machined to final dimensions (per desired specifications). The outer surfaces of the bypass valve can now be restored. Using an autogenous weld process (e.g. GTAW, SMAW, etc.), the plug can be tacked into the bore. Pre/post heating is optional and not required for this operation.

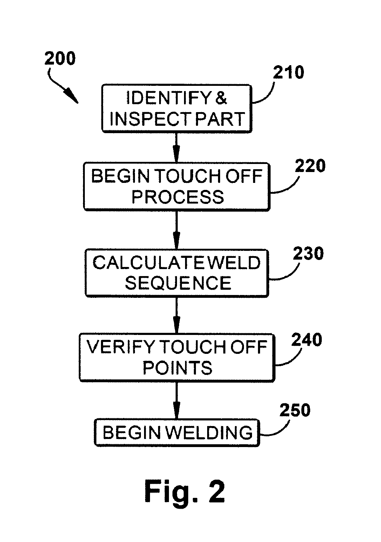

Fig. 2 shows a flowchart of the robotic welding process 200, according to aspects of the present invention. The following steps can illustrate the part set up for robotic seal weld of plug and weld build up of the outer diameter. In step 210 the part is identified and/or marked. This may include comparing the part number stamped on the bottom of a valve to the number recorded in the job planning document. The back of the valve should be seated on the plate over the hole in the center of the chuck to provide a fixed reference point, and assure a stable position. If desired, the chuck may be tightened to secure the part. Check that power is on to the robot controller, welding power supply, induction machine, induction machine chiller, temperature controller (switch in "robot" mode), air supply to induction coil elevator and torch cleaning station.

In step 220 the touch off program is implemented. There can be about four points to touch off on, which will determine the current condition of the valve, and via comparison software in the robot, allow it to calculate the welding sequence needed to build up to the final valve size according to the desired specifications (e.g., from surface 120 to surface 130). In alternative embodiments, more or less than four touch off points could be used. With the valve in the horizontal position and robot arm at its home location, locate top dead center and punch this location. All touch off points can occur at this X axis position. Use the axis position screen to monitor this value for the remainder of the touch offs. Remove gas nozzle and contact tip from robot arm. Retract electrode so none is showing. Install the provided touch-off tip finger tight, assure it fully seated against the torch body and no threads are visible. Touch off and record the four point locations. In additional embodiments of the present invention, the touch off step can be performed with the same robot arm that performs the welding. A further advantage of the present invention is the ability to avoid the use of special touch probes, or complex measuring devices, which would add significant cost to the system.

In step 230 the weld sequence is calculated and the program is verified. Block through program to verify torch angle and position were understood by the controller and recorded properly. Select the proper part number, by inputting the valve part number. The software in the welding robot will be able to calculate the amount of weld required to build up the valve to desired specifications.

Clean the gas nozzle and contact tip, inspect for damage and replace as necessary. Extend the electrode, install the contact tip and gas nozzle, and trim the electrode beyond the contact tip. If the touch off tip is left in place, it may cause damage to the tip and robot wire feed mechanism during program execution.

In step 240, the robot will play back the touch off points. This should be watched closely for any errors as if the spacing is incorrect, the weld will not lay in as desired. The valve can be brought such that its axis is vertical in the positioner, and the induction coil can be lowered. The coil will automatically raise at completion of the hold time. The plug will be seal welded in place, and the robot will go to the torch cleaning station.

In step 250, the robot will begin welding from point to point along the plug. The robot may go to the torch cleaning station between welds. The robot can weld a fast-pass at the first point to assist in maintaining control of the molten pool in later operations. There may be a pause between welds to reach interpass temperature. The robot can weld up the conical section from the second point to the third point, or vice-versa. The robot will weld up the outer diameter from the second point to the first point. The valve can be rotated against the wire brush to knock off the slag. At this point the robot will calculate the material required, and use combinations of passes as in previous steps to complete the part. Slag can be removed at the completion of each layer. Should there be any errors, the robot can illuminate an indicator, and sound an alarm.

When all layers are complete, the valve can return with its axis vertical, and the robot may signal the operator with a light or other indicator that the part is complete. The induction coil can be lowered to keep the part above its minimum preheat until it is removed. The bypass valve can be visually inspected to check the weld.

While the invention has been described in connection with what is presently considered to be one of the most practical and preferred embodiments, it is to be understood that the invention is not to be limited to the disclosed embodiments, but on the contrary, is intended to cover various modifications and equivalent arrangements included within the spirit and scope of the appended claims.

## Claims

1. A method (200) for repairing an article (100), the method comprising the steps of:
identifying (210) the article to be repaired;
a touch off step (220), said touch off step comprising locating and marking a plurality of spatial coordinates on the article relative to a home position;
calculating (230) a desired welding sequence to obtain a desired shape of said article;
verifying (240) the desired location of said plurality of spatial coordinates;
welding (250) at least a first weld repair layer on a surface of the article;
wherein, the article (100) is repaired by building up at least a portion of a surface of said article to a desired shape or profile.

2. The method of claim 1, further comprising recording said plurality of spatial coordinates by storing in a memory with respect to a home position, wherein recording is performed subsequent to said touch off step.

3. The method of claim 2, further comprising placing the article (100) to be repaired in a fixed location relative to the home position, wherein said placing is performed subsequent to said recording step..

4. The method of any of the preceding claims, further comprising a placing step performed subsequent to said touch off step, said placing step comprising:
placing the article (100) to be repaired in a fixed location relative to the home position.

5. The method of any of the preceding claims, wherein said calculating step uses engineering rules programmed into a controller to ensure a successful welding step.

6. The method of claim 5, wherein said calculating step further comprises calculating data against tabulated part data that has been pre-loaded into said controller.

7. The method of any of the preceding claims, wherein said article (100) is chosen from the group comprising:
a steam turbine component, a gas turbine component, a wind turbine component, and a bypass valve.

8. The method of any of the preceding claims, wherein a robotic system is used to perform, at least one of, the following steps:
the touch off step (220), the calculating step (230), the verifying step (240) and the welding step (250).
